(19) Europäisches Patentamt
European Patent Office
Office européen des brevets

(11) EP 1 539 875 B1

(12) FASCICULE DE BREVET EUROPEEN

(45) Date de publication et mention de la délivrance du brevet:
**10.05.2006 Bulletin 2006/19**

(21) Numéro de dépôt: **03758220.2**

(22) Date de dépôt: **08.08.2003**

(51) Int Cl.:
***C08K 5/5313*** (2006.01) ***C08G 69/26*** (2006.01)
***C08K 5/00*** (2006.01) ***C08K 5/3492*** (2006.01)
***C08G 69/02*** (2006.01) ***C08G 69/08*** (2006.01)
***C08G 69/14*** (2006.01)

(86) Numéro de dépôt international:
**PCT/FR2003/002497**

(87) Numéro de publication internationale:
**WO 2004/016684 (26.02.2004 Gazette 2004/09)**

# (54) COMPOSITION DE POLYAMIDE IGNIFUGEE

FLAMMGEHEMMTE POLYAMID-ZUSAMMENSETZUNG

FIRE-RESISTANT POLYAMIDE COMPOSITION

(84) Etats contractants désignés:
**AT BE BG CH CY CZ DE DK EE ES FI FR GB GR HU IE IT LI LU MC NL PT RO SE SI SK TR**

(30) Priorité: **13.08.2002 FR 0210273**

(43) Date de publication de la demande:
**15.06.2005 Bulletin 2005/24**

(73) Titulaire: **Rhodia Engineering Plastics Srl**
**20020 Ceriano Laghetto (MI) (IT)**

(72) Inventeurs:
- **MITCHELL, James**
**F-69900 St Priest (FR)**
- **GALLI, Daniele**
**I-22066 Mariano Comense (CO) (IT)**

(74) Mandataire: **Esson, Jean-Pierre**
**Rhodia Services,**
**Direction de la Propriété Industrielle,**
**Centre de Recherches de Lyon**
**BP 62**
**85, avenue des Frères Perret**
**69192 Saint-Fons Cédex (FR)**

(56) Documents cités:
**WO-A-02/28953**
**WO-A-97/24388**
**US-B1- 6 255 371**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 539 875 B1

Printed by Jouve, 75001 PARIS (FR)

## Description

La présente invention concerne une composition ignifugée comprenant au moins un polyamide étoile et un système d'ignifugation comprenant un phosphinate et un produit de réaction de la mélamine. Une telle composition permet d'obtenir des articles présentant une faible propagation des flammes lorsqu'ils entrent en combustion ainsi que des propriétés mécaniques satisfaisantes. Cette composition est notamment utile pour la réalisation d'articles moulés employés dans le domaine de la connectique électrique ou électronique.

Les compositions à base de résine polyamide sont utilisées pour la réalisation d'articles par différents procédés de mise en forme. Ces articles sont utilisés dans de nombreux domaines techniques.

Parmi ceux-ci, la réalisation de pièces de systèmes électriques ou électroniques est une application importante requérant des propriétés particulières. Ainsi, ces pièces doivent présenter des propriétés mécaniques élevées mais également des propriétés de résistance chimique, d'isolation électrique, ainsi qu'une bonne ignifugation lorsque ces pièces rentrent en combustion.

L'ignifugation des compositions à base de résine polyamide linéaires a été étudiée depuis très longtemps. Ainsi, les ignifugeants principaux utilisés sont le phosphore rouge, les composés halogénés tels que les polybromodiphényles, les polybromodiphénoxydes, les polystyrènes bromés, des composés organiques azotés appartenant à la classe des triazines telles que la mélamine ou ses dérivés comme le cyanurate de mélamine et plus récemment les phosphates, polyphosphates et pyrophosphates de mélamine, les acides organo-phosphoreux et leurs sels, en particulier en association avec des polymères thermoplastiques, tels que des polyamides linéaires (DE-A-2 252 258, DE-A-2 447 727 et US 6,255,371).

On recherche de manière constante des agents ignifugeants ayant des propriétés d'ignifugation de plus en plus élevée. Par ailleurs, les ignifugeants, utilisées généralement dans des quantités importantes conduisent à des problèmes de mise en forme des pièces. De plus, certains ignifugeants contenant des halogènes ou du phosphore rouge peuvent générer des gaz ou vapeurs toxiques lors de la combustion de la composition polyamide.

En outre, les ignifugeants sont connus pour être instables à des températures élevées.

Ainsi, une partie des ignifugeants se dégrade lors du procédé de fabrication du polyamide, diminuant ainsi leur efficacité ignifugeante. WO-A-0 228 953 décrit une composition ignifugeante utilisée dans des compositions polyamides renforcées fibres de verre, qui comprend un composé de type phosphinate et un sel polyphosphate de 1,3,5- triazine.

Il existe ainsi un besoin de compositions à base de polyamide pour la réalisation d'articles ayant des propriétés mécaniques satisfaisantes et une bonne ignifugation, tout en évitant les inconvénients mentionnés précédemment.

La présente invention concerne une composition comprenant au moins :

a) une matrice polyamide à base de polyamide étoile comprenant au moins des chaînes macromoléculaires de formule (I) :

$$R_1\text{-}[\text{-}A\text{-}X\text{-}(\text{-}Y\text{-}R_2\text{-}Z\text{-})_n\text{-}R_3]_m \qquad (I)$$

et éventuellement des chaînes macromoléculaires de formule (II) :

$$R_4\text{-}[\text{-}Y\text{-}R_2\text{-}Z\text{-}]_p\text{-}R_3 \qquad (II)$$

dans lesquelles :

- Y est le radical :

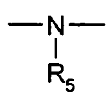

quand X et Z représentent le radical :

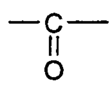
;

- Y est le radical :

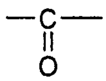

quand X et Z représentent le radical :

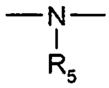

;

- A est une liaison covalente ou un radical hydrocarboné aliphatique pouvant comprendre des hétéroatomes et comprenant de 1 à 20 atomes de carbone, préférentiellement de 1 à 10 atomes de carbone ;
- $R_1$ est un radical hydrocarboné comprenant au moins 2 atomes de carbone, linéaire

ou cyclique, aromatique ou aliphatique, préférentiellement de 2 à 6 atomes de carbone, et pouvant comprendre des hétéroatomes ;

- $R_2$ est un radical hydrocarboné aliphatique ou aromatique ramifié ou non comprenant de 2 à 20 atomes de carbone, préférentiellement de 6 à 12 atomes de carbone ;
- $R_3$ et $R_4$ représentent indépendamment l'un de l'autre l'hydrogène, un radical -OH, et/ou un radical hydrocarboné comprenant au moins un groupement :

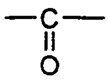 ou 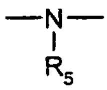 ;

- $R_5$ représente l'hydrogène ou un radical hydrocarboné comprenant notamment de 1 à 6 atomes de carbone ;
- m représente un nombre entier compris entre 3 et 8 (bornes incluses), préférentiellement entre 3 et 4 ;
- n représente un nombre entier compris entre 50 et 200 (bornes incluses), préférentiellement entre 100 et 200, particulièrement entre 150 et 200 ; et
- p représente un nombre entier compris entre 50 et 200 (bornes incluses), préférentiellement entre 100 et 200, particulièrement entre 150 et 200 ; et

b) un système d'ignifugation comprenant au moins :

- un composé (F1) de formule (VI) :

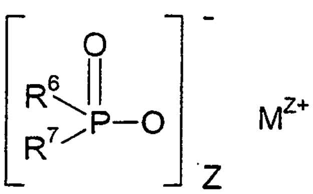

(VI)

dans lequel :

- $R_6$ et $R_7$ sont identiques ou différents et représentent une chaîne alkyle linéaire ou branchée comprenant de 1 à 6 atomes de carbones, préférentiellement de 1 à 3 atomes de carbones, et/ou un radical aryle ;
- M représente un ion calcium, magnésium, aluminium et/ou zinc, préférentiellement un ion magnésium et/ou aluminium ;
- Z représente 2 ou 3, préférentiellement 3 ; et
- un composé (F2) qui est un produit de réaction entre l'acide phosphorique et la mélamine et/ou un produit

de réaction entre l'acide phosphorique et un produit condensé de la mélamine.

Le polyamide étoile selon l'invention est notamment décrit dans le brevet US6160080, cité ici à titre de référence.

La demanderesse a découvert de manière tout à fait surprenante que les polyamides étoiles et le système d'ignifugation particulier selon l'invention agissent en synergie dans la composition permettant d'obtenir des articles présentant une faible propagation des flammes, de bonnes propriétés mécaniques et une bonne stabilité thermique par rapport aux compositions de l'art antérieur comprenant des polyamides linéaires.

Préférentiellement, la composition selon l'invention comprend de 30 à 99 % en poids de polyamide étoile, préférentiellement de 30 à 77 %, par rapport au poids total de la composition.

Le radical $R_1$ peut être un radical choisi parmi le groupe cycloaliphatique, arylaliphatique, et aliphatique linéaire. Préférentiellement, dans ce cas là, le rapport massique entre le poids de chaînes polymériques de formule (I) et le poids total de chaînes polymériques de formules (I) et (II) est compris entre 0,10 et 1. Le radical $R_1$ peut être un radical aromatique. Préférentiellement, dans ce cas là, le rapport massique entre le poids de chaînes polymériques de formule (I) et le poids total de chaînes polymériques de formules (I) et (II) est inférieur à 1, de préférence inférieur à 0,9. $R_1$ peut représenter un radical choisi parmi le radical cyclohexanontétrayle, le radical 1,1,1-triyle propane, le radical 1,2,3-triyle propane et le radical :

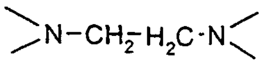 .

Comme autres radicaux $R_1$ convenables pour l'invention, on peut citer, à titre d'exemple, les radicaux trivalents de phényle et cyclohexanyle substitués ou non, les radicaux tétravalents de diaminopolyméthylène avec un nombre de groupes méthylène compris avantageusement entre 2 et 12 tels que le radical provenant de l'EDTA (acide éthylène diamino tétracétique), les radicaux octovalents de cyclohexanonyle ou cyclohexadinonyle, et les radicaux provenant de composés issus de la réaction des polyols tels que glycol, pentaérythritol, sorbitol ou mannitol avec l'acrylonitrile.

Généralement, les radicaux $R_2$ sont des restes d'aminoacides ou de lactames. $R_2$ peut être un radical pentaméthylénique. Dans ce mode de réalisation le polyamide a une structure type polycaproamide ou PA 6. D'autres radicaux $R_2$ peuvent être utilisés tels que les radicaux undécaméthylénique qui conduisent à un polyamide à structure type PA 12. Il est également possible d'obtenir des polyamides présentant des radicaux $R_2$ comprenant 8 ou 10 atomes de carbone correspondant respectivement à des polyamides de structure type PA9 et PA11.

Le radical A, de préférence, est un radical méthylénique ou polyméthylénique tel que les radicaux éthyle, propyle ou butyle, ou un radical polyoxyalkylènique tel que le radical polyoxyethylènique.

Comme mentionné précédemment, $R_3$ et $R_4$ peuvent représenter un atome d'hydrogène et/ou un radical -OH. Il est entendu que $R_3$ peut représenter un radical -OH, lorsque Z représente un radical

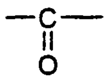 ;

et $R_4$ peut représenter un radical -OH, lorsque Y représente un radical

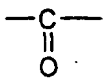 .

De même, $R_3$ peut représenter un atome d'hydrogène, lorsque Z représente un radical

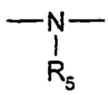 ;

et $R_4$ peut représenter un atome d'hydrogène, lorsque Y représente un radical

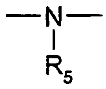 .

$R_3$ et $R_4$ peuvent également représenter un radical hydrocarboné, ayant préférentiellement de 1 à 10 atomes de carbone, comprenant au moins un groupement :

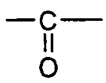 ou 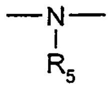 .

De manière préférentielle, $R_3$ et $R_4$ représentent un radical hydrocarboné comprenant au moins un groupement :

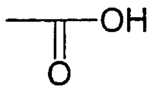

ou

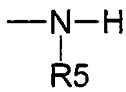

Ainsi, les chaînes polymériques de formule (I) définissent un polyamide étoile comprenant des branches polyamides de type PA 6 dans un des modes de réalisation préférés de l'invention, et un noyau central constitué par un noyau cycloaliphatique.

Ces chaînes polymériques de formule (I) sont, dans un des modes préférés de l'invention, en mélange avec des chaînes polyamides linéaires de formule (II). La longueur ou le poids moléculaire des chaînes linéaires de formule (II) ou des branches du polyamide étoile peut être élevé. Ainsi, le polymère linéaire comme la chaîne de chaque branche du polymère étoile présente un $\overline{Mn}$ avantageusement supérieur à 5 000.

Préférentiellement, le polyamide étoile selon l'invention est obtenu au moins à partir des monomères de formule :

$HOOC—R_2—NH_2$ (III)

et/ou un lactame de formule :

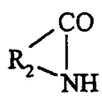 (IV)

en présence d'un composé polyfonctionnel de formule (V) :

$R_1$-[-A-X-H]$_m$ (V)

dans lesquelles A, X, $R_1$, $R_2$, $R_5$ et m sont ceux définis précédemment, éventuellement en présence d'un composé initiateur de polycondensation.

La fonction réactive du composé polyfonctionnel de formule (V) représentée par le symbole X-H est une fonction capable de former une fonction amide, c'est à dire par exemple une fonction acide ou amine. Les composé des formules (V) préférés sont les suivants :

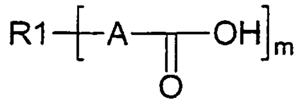

ou

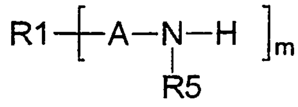

L'initiateur de polycondensation peut être de l'eau, un acide minéral ou carboxylique et/ou une amine primaire. Ce composé est ajouté avantageusement pour obtenir une concentration pondérale comprise entre 0,5 et 5 % en poids par rapport au mélange total.

A titre d'exemple, le composé polyfonctionnel de formule (V) peut être choisi dans le groupe comprenant le composé 2,2,6,6-tétra-(β-carboxyéthyl) cyclohexanone, le composé diaminopropane - N,N,N',N' acide tétraacétique, les triamines commercialisées sous le nom JEFFAMINES T®, et obtenues par réaction de l'oxyde de propylène sur le triméthylol propane ou le glycérol et amination des extrémités hydroxydes.

Ces triamines sont commercialisés sous le nom commercial JEFFAMINES T® par la société HUNTSMAN, et ont comme formule générale :

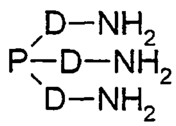

Dans laquelle :

- P représente un radical 1,1,1-triyle propane, ou 1,2,3-triyle propane, et
- D représente un radical polyoxyéthylénique.

On peut utiliser 0,1 à 2 % en moles de composé polyfonctionnel de formule (V), préférentiellement 0,3 à 1 % en moles, par rapport au nombre de moles total du polyamide obtenu.

La polycondensation peut être réalisée selon les conditions opératoires classiques de polycondensation des aminoacides ou lactames de formule (III) ou (IV), quand celle-ci est réalisée en absence du composé multifonctionnel de formule (V).

Ainsi, le procédé de polycondensation peut comprendre brièvement :

- un chauffage sous agitation et sous pression du mélange des monomères : composés de formule (III) et/ou (IV) et du composé de formule (V) avec l'initiateur (généralement de l'eau),
- un maintien du mélange à cette température pendant une durée déterminée, puis décompression et maintien sous un courant de gaz inerte (par exemple de l'azote) pendant une durée déterminée à une température supérieure au point de fusion du mélange pour ainsi continuer la polycondensation par élimination de l'eau formée.

Selon le procédé de l'invention, la durée du maintien sous gaz inerte, ou en d'autres termes de finissage de la polycondensation permet de déterminer et contrôler la concentration en chaînes polymériques de formule (I) dans le mélange polyamide. Ainsi, plus le temps de maintien sera long plus la concentration en chaînes polymériques de formule (I) sera élevée.

Il est également évident que la concentration en chaînes polymériques de formule (I) ou polyamide étoile est fonction de la quantité de composé multifonctionnel de formule (V) ajoutée dans le mélange.

Il est également possible, sans pour cela sortir du cadre de l'invention, d'ajouter au mélange de polycondensation d'autres monomères comprenant des fonctions susceptibles de former des fonctions amides pour ainsi obtenir des

copolyamides ou polyamides modifiés. Des monomères diacides ou diamines pourront être ajoutés à une concentration pondérale inférieure à 20 % par rapport au mélange total.

En sortie de polycondensation, le polymère est refroidi avantageusement par de l'eau, et extrudé sous forme de jonc. Ces joncs sont coupés pour produire des granulés.

Pour éliminer les monomères non polycondensés, notamment dans le cas où un des monomères est du caprolactame, les granulés peuvent être lavés à l'eau puis séchés sous vide.

D'autres polymères tels que des polyamides, comme par exemple des polyamides linéaires peuvent être ajoutés à la matrice à base de polyamide. Tous les types polyamides peuvent être utilisés pour la réalisation de l'invention, par exemple les polyamides du type de ceux qui sont obtenus par polycondensation d'une diamine avec un diacide carboxylique, tel que le polyamide 66, ou les polyamides du type de ceux qui sont obtenus par polycondensation des aminoacides ou lactames, tel que le polyamide 6. On préfère tout particulièrement le polyamide 6, le polyamide 11, le polyamide 12, les copolyamides 6/6.6, et 6/6.36, les mélanges et copolymères à base de ces polyamides ou copolyamides.

Comme le polyamide étoile conforme à l'invention présente un indice de fluidité à l'état fondu plus élevé que les polyamides linéaires connus, pour des masses moléculaires et des propriétés mécaniques similaires, la composition chargée peut être injectée plus facilement dans un moule, c'est-à-dire à des cadences plus élevées. Elle permet également d'obtenir un remplissage plus homogène et complet des moules, notamment quand ceux-ci ont une forme complexe.

Le système d'ignifugation selon la présente invention comporte les composés F1 et F2. Un tel système d'ignifugation est notamment décrit dans le brevet US 6255371. La composition peut comprendre de 1 à 70 % en poids du système d'ignifugation selon l'invention, préférentiellement de 5 à 40 %, encore plus préférentiellement de 10 à 30 %, particulièrement de 15 à 30 %, par rapport au poids total de la composition. Préférentiellement, le rapport en poids des composés F1 et F2 est respectivement compris entre 1: :1 et 4 : 1, préférentiellement aux environ de 3:2.

$R_6$ et $R_7$ du composé F1 de formule (VI) peuvent être identiques ou différents et représenter un méthyle, éthyle, n-propyl, isopropyl, n-butyl, ter-butyl, n-pentyl et/ou aryle tel qu'un phényle par exemple. M est préférentiellement un ion aluminium. L'acide phosphinique du composé F1 peut être choisi par exemple parmi le groupe constitué par l'acide diméthyl phosphinique, l'acide éthylméthyl phosphinique, l'acide diéthyl phosphinique et l'acide méthyl-n-propyl phosphinique, ou leur mélange. Différents acides phosphoniques peuvent être utilisés en combinaison.

Les sels d'acide phosphinique selon l'invention peuvent être préparés selon les méthodes usuelles bien connues de l'homme du métier, telle que par exemple celle décrite dans le brevet EP 0699708. Les sels d'acide phosphinique selon l'invention peuvent être utilisés sous différentes formes dépendantes de la nature du polymère et des propriétés désirées. Par exemple, pour obtenir une bonne dispersion dans le polymère, un sel d'acide phosphinique peut être sous forme de fines particules.

Le composé F2 est un produit de réaction entre l'acide phosphorique et la mélamine et/ou un produit de réaction entre l'acide phosphorique et un produit condensé de la mélamine. Différents composés F2 peuvent être utilisés en combinaison. Les produits condensés de la mélamine sont par exemple la mélam, la mélem et la mélom. On peut également utiliser des composés encore plus condensés. Préférentiellement, le composé F2 peut être choisi par exemple parmi le groupe constitué par les produits de réaction suivants : polyphosphate de mélamine, polyphosphate de mélam, et polyphosphate de mélem, ou leur mélange. Il est particulièrement préférable d'utiliser un polyphosphate de mélamine ayant des chaînes d'une longueur supérieure à 2, et en particulier supérieure à 10.

Ces composés sont notamment décrit dans le brevet WO 9839306. Les composés F2 peuvent être également obtenus par des procédés autres que ceux basés sur la réaction directe avec un acide phosphorique. Par exemple, le polyphosphate de mélamine peut être préparé par réaction de la mélamine avec de l'acide polyphosphorique (voir WO 9845364), mais également par condensation du phosphate de mélamine et du pyrophosphate de mélamine (voir WO 9808898).

D'une manière tout à fait préférentielle, le système d'ignifugation de la présente invention comprend un composé F1 de formule (VI) dans lequel $R_6$=$R_7$=éthyle, M=aluminium et

Z=3 ; et un composé F2 : polyphosphate de mélamine. Le rapport en poids des composés F1 et F2 est respectivement de 3 :2.

La composition selon l'invention peut également comprendre des charges de renfort bien connues de l'homme du métier et choisies par exemple dans le groupe comprenant des fibres de verre, des fibres de carbone, des fibres minérales, des fibres céramiques, des fibres organiques thermorésistantes comme les fibres en polyphthalamide et des charges minérales telles que la wollastonite, le kaolin, l'argile, la silice et le mica, et des nanocharges minérales telles que la montmorillonite et l'$\alpha$-ZrP ; ou leurs mélanges. Les fibres de verre sont particulièrement préférées selon l'invention. Les fibres de verre préférentiellement utilisées sont des fibres de verre pour polyamide, ayant, par exemple, un diamètre moyen compris entre 5 et 20 $\mu$m, préférentiellement entre 10 et 14 $\mu$m, telles que par exemple les fibres de verre CS123D-10C (Owens Corning Fibreglass), CS1103 (Owens Coming Fibreglass) et CS983 (Vetrotex) et CS99B (Vetrotex).

Les charges de renfort peuvent représenter de 0 à 80 %, préférentiellement de 5 à 55 %, encore plus préférentiellement de 10 à 40 % en poids par rapport au poids total de la composition.

La composition selon l'invention peut également comprendre un ou plusieurs additifs habituellement utilisés par un homme du métier dans les compositions à base de polyamide utilisées pour la fabrication d'articles moulés. Ainsi, on peut citer à titre d'exemple d'additifs les stabilisants thermiques, les agents de moulage tels que le calcium stéarate, les stabilisants U.V., les antioxydants, les lubrifiants, les réducteurs d'abrasion, les pigments, colorants, plastifiants, les promoteurs de marquage au laser ou des agents modifiant la résilience. A titre d'exemple, les antioxydants et stabilisants chaleur sont, par exemple, des halogénures d'alcalins, des halogénures de cuivre, les composés phénoliques stériquement encombrés, les phosphites organiques et les amines aromatiques. Les stabilisants U.V. sont généralement des benzotriazoles, des benzophénones ou des HALS en association avec des antioxydants.

La composition selon l'invention peut également comprendre un ou plusieurs agents ignifugeants ou agents synergiques au système d'ignifugation tels que par exemple ceux choisis parmi le groupe suivant : les composés inorganiques et/ou des produits minéraux choisis parmi : les zéolites, la poudre de céramique, l'hydroxyde de magnésium, les hydrotalcites, les carbonates de magnésium et les autres carbonates alcalino-terreux, l'oxyde de zinc, le stannate de zinc, l'hydroxystannate de zinc, le phosphate de zinc, le borate de zinc, le sulfide de zinc, l'hydroxyde d'aluminium, le phosphate d'aluminium et le phosphore rouge, les composés organiques azotés appartenant à la classe des triazines telles que la mélamine ou ses dérivés comme le cyanurate de mélamine, les phosphates, polyphosphates et pyrophosphates de mélamine et la melem, les acides organo-phosphoreux et leurs sels. Ces agents sont notamment mentionnés dans les brevets US 6344158, US6255371 et US6365071.

La présente invention concerne également un procédé de fabrication d'une composition ignifugée selon l'invention dans lequel on mélange, par exemple à l'extrusion en voie fondue, au moins un polyamide étoile et un système d'ignifugation tels que décrit précédemment.

Le mélange peut être effectué à l'état fondu par exemple dans une extrudeuse mono ou bivis, ou par mélange sans passer à l'état fondu, par exemple dans un mélangeur mécanique. Les composés peuvent être introduits simultanément ou successivement. Tous les moyens connus de l'homme du métier concernant l'introduction des différents composés d'une composition thermoplastique peuvent être utilisés. On utilise généralement un dispositif d'extrusion dans lequel la matière est chauffée, soumise à une force de cisaillement, et véhiculée. De tels dispositifs sont parfaitement connus de l'homme du métier. La composition selon l'invention, lorsqu'elle est préparée à l'aide d'un dispositif d'extrusion peut être conditionnée sous forme de granulés ou utilisée directement pour la mise en forme d'un article.

La présente invention concerne aussi un procédé de fabrication d'un article par mise en forme d'une composition selon l'invention par un procédé choisi dans le groupe comprenant un procédé d'extrusion, tel que l'extrusion de feuilles et de films, de moulage, tel que le moulage par compression, d'injection, tel que le moulage par injection, et de filage.

La présente invention convient particulièrement pour la fabrication d'articles utilisés dans le domaine de l'automobile, de la connectique électrique ou électronique tels que des éléments de disjoncteurs, interrupteurs, connecteurs ou analogues.

## PARTIE EXPERIMENTALE

Les composés utilisés sont les suivants :

- PA 6 : PA 6 ayant un indice de viscosité de 140 ml/g (ISO 307, acide formique), et un Mn de 17600 g/mol (par GPC) ;
- PA 66 : PA 66 ayant un indice de viscosité de 140 ml/g (ISO 307, acide formique), et un Mn de 17600 g/mol (par GPC) ;
- PA Branché : PA 6 étoile obtenu par copolymérisation de caprolactame de formule (IV) avec 0,5 % en moles de 2,2,6,6-tétra-(β-carboxyéthyl) cyclohexanone (composé polyfonctionnel de formule (V)) par rapport au nombre total de moles du polyamide. Le polyamide possède un indice de fluidité en fondue (MFI) de 40 g/10minutes (selon la norme ASTM D1238, à une température de 275°C sous une charge de 325g), et un Mn de 18000 g/mol (par GPC) ;
- SI : le système d'ignifugation comprend un composé F1 de formule (VI) dans lequel $R_6$=$R_7$=éthyle, M=aluminium et Z=3 ; et un composé F2 : polyphosphate de mélamine. Le rapport en poids des composés F1 et F2 est respectivement de 3 :2.
- Fibres de verre CS123D-10C (Owens Coming Fibreglass, Belgique) ;
- Melem : Delamin® 450 (Delacal, Angleterre) ;
- Borate de zinc: Firebrake® ZB (US Borax, USA) ;
- Stéarate de calcium.

<u>Exemple 1 :</u>

Les compositions sont préparées par mélange des composants dans des proportions indiquées dans les exemples, sur une extrudeuse double-vis Werner & Pfleiderer ZSK 30, ayant une vitesse de vis de 250 rpm et une sortie de 15 Kg/h. Des températures d'environ 240°C sont utilisées pour le PA6. Des températures d'environ 270°C sont

utilisées pour le PA66.

Les fibres de verre et les composés minéraux sont ajoutés au mélange à la gorge de l'extrudeuse.

Les granules sont séchés et moulés sur une machine de moulage par injection Arburg 320 M500-210 à une température de 240°C (PA6 et PA branchés) ou de 270°C (PA66) et ensuite moulés à 80°C.

Les propriétés sont déterminées sur des éprouvettes, selon les méthodes suivantes :

La résistance à la flamme est mesurée selon le test UL-94 ("Underwriters Laboratories"). Ce test est réalisé avec des éprouvettes d'épaisseur de 1,6 mm et 0,8 mm, après conditionnement de 48 heures à 50 % RH (humidité relative) et 168 heures à 70°C. Le résultat est codifié comme suit :

- N.C.: non classé (ignifugation faible)
- V-2 : le temps moyen de combustion est inférieur à 25 secondes, le temps de combustion maximum est inférieur à 30 secondes (auto-extinction) ; goutte de polyamide enflammant le coton
- V-1 : temps moyen de combustion est inférieur à 25 secondes, le temps de combustion maximum est inférieur à 30 secondes (auto-extinction) ; pas d'inflammation du coton par la goutte
- V-0 : temps moyen de combustion est inférieur à 5 secondes, le temps de combustion maximum est inférieur à 10 secondes (auto-extinction) ; pas d'inflammation du coton

| | **V0** | **V1** | **V2** |
|---|---|---|---|
| Temps de combustion max (s) | 10 | 30 | 30 |
| Temps de combustion moyen (s) | 5 | 25 | 25 |
| Inflammation du coton par goutte | non | non | oui |

Les temps de combustion du composé lors du test UL-94 sont mesurés en secondes.

La résistance au fil incandescent (GWT) est mesurée selon la norme IEC 695-2-1 sur des éprouvettes d'épaisseur de 1,5 mm et 1,0 mm. Les résultats à différentes températures sont classifiés comme suit :

| | |
|---|---|
| **PI** | Pas d'inflammation ou pas d'inflammation soutenue. |
| **passe** | Inflammation durant l'application du fil incandescent mais auto extinction dans les 30 secondes après enlèvement dudit fil incandescent. Pas de goutte enflammée. |
| **échec** | Inflammation durant l'application du fil incandescent et pas d'auto extinction dans les 30 secondes après enlèvement dudit fil incandescent, ou formation de gouttes enflammées. |

Les propriétés mécaniques sont déterminées selon les méthodes suivantes :

- Résistance aux chocs CHARPY selon les normes ISO 179\1eA et ISO 179\1eU.
- La Fluidité en fondue (MFI) mesurée à 275°C selon la norme ISO 1133, avec une charge de 2,16 kg. Le (MFI) du PA Branché est obtenu à 235°C.
- L'indice de résistance au cheminement (PTI) selon la norme IEC 112.
- La perte de poids des compositions obtenue est mesurée par une analyse thermo-gravimétrique. La stabilité thermique est comparée en mesurant la perte de poids par le procédé TGA isotherme à 300°C (température : 50°C à 300°C, avec 100°C/minute), effectué avec le TGA Perkin Elmer GA 7.

Les propriétés des compositions réalisées précédemment sont rassemblées dans le tableau 1.

Tableau 1

| | | Essai 1 | Essai Comparatif 2 | Essai Comparatif 3 |
|---|---|---|---|---|
| Polyamide | % | PA Branché 54,75 | PA 6 54,75 | PA 66 54,75 |
| SI | % | 15 | 15 | 15 |
| Stéarate de calcium | % | 0,25 | 0,25 | 0,25 |
| Fibres de verre CS 123D-10C | % | 30 | 30 | 30 |
| Charpy ISO (entaillé) | $kJ/m^2$ | 9,4 | 8,9 | 8,3 |
| Charpy ISO (non-entaillé) | $kJ/m^2$ | 71 | 67 | 69 |
| MFI | g/10min. | 15,6 | 10,4 | 6,9 |
| PTI 500V | | passe | passe | échec |
| UL94 1,6mm | | V0 | V0 | V0 |
| Tps Combustion (Maximum / Moyen) | s | 5/3,3 | 6/3,2 | 5/2,8 |
| UL94 0,8mm | | V0 | V1 | V0 |
| Tps Combustion (Maximum / Moyen) | s | 6/2,4 | 14/6,8 | 5/3,3 |
| GWT 1,0 mm 960°C<br>GWT 1,5 mm 960°C | | passe<br>passe | passe<br>passe | échec<br>passe |
| Perte de poids TGA isotherme, 300°C/$N_2$ | | | | |
| 5 minutes | % | 0,10 | 0,45 | 0,85 |
| 10 minutes | % | 0,40 | 1,00 | 1,55 |
| 15 minutes | % | 1,05 | 1,55 | 1,90 |
| Consistance de la couleur durant le moulage | | bon | bon | mauvais |

En comparaison avec la composition de l'essai 1 selon l'invention, celle de l'essai comparatif 2 présente de mauvais résultats sur le test UL94 (0.8mm), et celle de l'essai comparatif 3 présente de mauvais résultats sur le test GWT (1.0mm). La composition de l'essai 1 avec le PA Branché est le plus stable avec la plus faible perte de poids. La composition de l'essai comparatif 3 avec le PA66 est la moins stable avec la plus forte perte de poids. La composition de l'essai comparatif 3 présente également des rayures noires durant le moulage de spécimens minces.

Exemple 2 :

Le tableau 2 ci-dessous présente des essais dans lequel le SI a été testé en présence d'autres additifs synergiques (composés inorganiques : borate de zinc ; composés azoté : melem) ainsi que 30 % en poids de fibre de verre dans des compositions à base de PA Branchés.

Tableau 2

| | | Essai 1 | Essai 4 | Essai 5 | Essai 6 | Essai 7 |
|---|---|---|---|---|---|---|
| Polyamide Branché | % | 54,75 | 57,75 | 52,75 | 52,75 | 52,75 |
| SI | % | 15 | 12 | 12 | 12 | 10 |
| Melem | % | | | | 5 | 5 |
| Borate de zinc | % | | | 5 | | 2 |
| Stéarate de calcium | % | 0,25 | 0,25 | 0,25 | 0,25 | 0,25 |
| Fibres de verre | % | 30 | 30 | 30 | 30 | 30 |
| Charpy ISO (entaillé) | $kJ/m^2$ | 9,3 | 9,8 | 7,6 | 8,3 | 8,0 |
| Charpy ISO (non-entaillé) | $kJ/m^2$ | 72 | 77 | 57 | 68 | 59 |
| MFI | g/10' | 13,2 | 15,3 | 14,8 | 12,8 | 13,2 |
| PTI 500V | | passe | passe | passe | passe | passe |
| UL94 1,6mm | | V0 | V0 | V1 | V0 | V1 |
| Tps de combustion Max./Moyen | s | 5/3,3 | 15/7,3 | 13/6,6 | 10/4,2 | 8/5,3 |
| UL94 0,8mm | | V0 | NC* | NC* | V1 | V2 |
| Ts de combustion Max./Moyen | s | 6/2,4 | - | - | 13/5,4 | 12/6,8 |
| GWT 1,0 mm | 960°C | passe | échec | échec | échec | passe |
| GWT 1,5 mm | 960°C | passe | échec | échec | passe | passe |
| GWT 1,0 mm | 750°C | PI | passe | PI | échec | PI |
| GWT 1,5mm | 750°C | PI | passe | PI | PI | PI |

Note: NC* - échantillon brûlés après conditionnement 48h/50%RH.

Ainsi les compositions selon l'invention permettent d'obtenir des articles ayant un comportement mécanique très satisfaisant ainsi qu'une faible inflammation et une bonne ignifugation, par rapport aux articles obtenus à partir de compositions de l'art antérieur comprenant des polyamides linéaires.

**Revendications**

**1.** Composition ignifugée comprenant au moins :

a) une matrice polyamide à base de polyamide étoile comprenant au moins des chaînes macromoléculaires de formule (I):

$$R_1\text{-[-A-X-(-Y-}R_2\text{-Z-)}_n\text{-}R_3]_m \qquad \text{(I)}$$

et éventuellement des chaînes macromoléculaires de formule (II) :

$$R_4\text{-[-Y-}R_2\text{-Z-]}_p\text{-}R_3 \qquad \text{(II)}$$

dans lesquelles :

- Y est le radical :

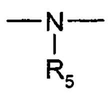

quand X et Z représentent le radical :

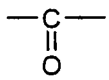
;

- Y est le radical :

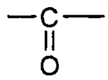

quand X et Z représentent le radical :

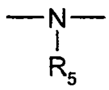
;

- A est une liaison covalente ou un radical hydrocarboné aliphatique pouvant comprendre des hétéroatomes et comprenant de 1 à 20 atomes de carbone ;
- $R_1$ est un radical hydrocarboné comprenant au moins 2 atomes de carbone, linéaire ou cyclique, aromatique ou aliphatique et pouvant comprendre des hétéroatomes ;
- $R_2$ est un radical hydrocarboné aliphatique ou aromatique ramifié ou non comprenant de 2 à 20 atomes de carbone,
- $R_3$ et $R_4$ représentent indépendamment l'un de l'autre l'hydrogène, un radical -OH, et/ou un radical hydrocarboné comprenant au moins un groupement :

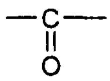
ou
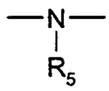
;

- $R_5$ représente l'hydrogène ou un radical hydrocarboné comprenant de 1 à 6 atomes de carbone ;
- m représente un nombre entier compris entre 3 et 8 ;
- n représente un nombre entier compris entre 50 et 200 ; et
- p représente un nombre entier compris entre 50 et 200 ; et

b) un système d'ignifugation comprenant au moins :

- un composé (F1) de formule (VI)

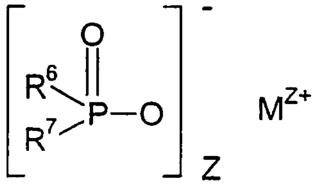
(VI)

dans lequel :

- $R_6$ et $R_7$ sont identiques ou différents et représentent une chaîne alkyle linéaire ou branchée comprenant de 1 à 6 atomes de carbones et/ou un radical aryle;
- M représente un ion calcium, magnésium, aluminium et/ou zinc ;
- Z représente 2 ou 3 ; et
- un composé (F2) qui est un produit de réaction entre l'acide phosphorique et la mélamine et/ou un produit

de réaction entre l'acide phosphorique et un produit condensé de la mélamine.

**2.** Composition selon la revendication 1, comprenant de 30 à 99 % en poids de polyamide étoile par rapport au poids total de la composition.

**3.** Composition selon la revendication 1 à 2, comprenant de 1 à 70 % en poids du système d'ignifugation, par rapport au poids total de la composition.

**4.** Composition selon l'une quelconque des revendications 1 à 3, **caractérisée en ce que** le radical $R_1$ est un radical choisi parmi le groupe cycloaliphatique, arylaliphatique, et aliphatique linéaire, le rapport massique entre le poids de chaînes polymériques de formule (I) et le poids total de chaînes polymériques de formules (I) et (II) étant compris entre 0,10 et 1.

**5.** Composition selon l'une quelconque des revendications 1 à 3, **caractérisée en ce que** le radical $R_1$ est un radical aromatique, le rapport massique entre le poids de chaînes polymériques de formule (I) et le poids total de chaînes polymériques de formules (I) et (II) étant inférieur à 1, de préférence inférieur à 0,9.

**6.** Composition selon l'une quelconque des revendications 1 à 5, **caractérisée en ce que** $R_2$ est un radical pentaméthylénique.

**7.** Composition selon l'une quelconque des revendications 1 à 6, **caractérisée en ce que** $R_1$ représente un radical choisi parmi le radical cyclohexanontétrayle, le radical 1,1,1-triyle propane, le radical 1,2,3-triyle propane et le radical :

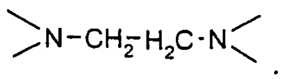

**8.** Composition selon l'une quelconque des revendications 1 à 7, **caractérisée en ce que** A représente un radical choisi parmi le radical méthylène, polyméthylénique et polyoxyalkylènique.

**9.** Composition selon l'une quelconque des revendications 1 à 8, **caractérisée en ce que** l'acide phosphinique du composé F1 peut être choisi parmi le groupe constitué par l'acide diméthyl phosphinique, l'acide éthylméthyl phosphinique, l'acide diéthyl phosphinique et l'acide méthyl-n-propyl phosphinique, ou leur mélange.

**10.** Composition selon l'une quelconque des revendications 1 à 9, **caractérisée en ce que** le composé F2 peut être choisi parmi le groupe constitué par le polyphosphate de mélamine, polyphosphate de mélam, et polyphosphate de mélem, ou leur mélange.

**11.** Composition selon l'une quelconque des revendications 1 à 10, **caractérisée en ce qu'**elle comprend de 0 à 80 % en poids de charges de renfort par rapport au poids total de la composition.

**12.** Composition selon l'une quelconque des revendications 1 à 11, **caractérisée en ce que** ladite composition comprend des charges de renfort choisies parmi le groupe comprenant : des fibres de verre, des fibres de carbone, des fibres minérales, des fibres céramiques, des fibres organiques thermorésistantes comme les fibres en polyphthalamide et des charges minérales telles que la wollastonite, le kaolin, l'argile, la silice et le mica, et des nanocharges minérales telles que la montmorillonite et l'$\alpha$-Zr phosphate, ou leurs mélanges.

**13.** Composition selon l'une quelconque des revendications 1 à 12, **caractérisé en ce que** ladite composition comprend des agents ignifugeants ou des agents synergiques au système d'ignifugation choisis parmi le groupe comprenant les composés inorganiques et/ou des produits minéraux choisis parmi : les zéolites, la poudre de céramique, l'hydroxyde de magnésium, les hydrotalcites, les carbonates de magnésium et les autres carbonates alcalino-terreux, l'oxyde de zinc, le stannate de zinc, l'hydroxystannate de zinc, le phosphate de zinc, le borate de zinc, le sulfide de zinc, l'hydroxyde d'aluminium, le phosphate d'aluminium et le phosphore rouge, les composés organiques azotés appartenant à la classe des triazines telles que la mélamine ou ses dérivés comme le cyanurate de mélamine et des phosphates, polyphosphates et pyrophosphates de mélamine, les acides organo-phosphoreux et leurs sels.

**14.** Procédé de fabrication d'une composition ignifugée dans lequel on mélange au moins :

a) une matrice polyamide à base de polyamide étoile comprenant au moins des chaînes macromoléculaires de formule (I) :

$$R_1\text{-}[\text{-}A\text{-}X\text{-}(\text{-}Y\text{-}R_2\text{-}Z\text{-})_n\text{-}R_3]_m \qquad (I)$$

et éventuellement des chaînes macromoléculaires de formule (II) :

$$R_4\text{-}[\text{-}Y\text{-}R_2\text{-}Z\text{-}]_p\text{-}R_3 \qquad (II)$$

dans lesquelles :

- Y est le radical :

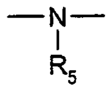

quand X et Z représentent le radical :

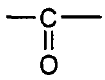
;

- Y est le radical :

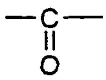

quand X et Z représentent le radical :

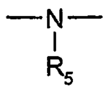
;

- A est une liaison covalente ou un radical hydrocarboné aliphatique pouvant comprendre des hétéroatomes et comprenant de 1 à 20 atomes de carbone ;
- $R_1$ est un radical hydrocarboné comprenant au moins 2 atomes de carbone, linéaire ou cyclique, aromatique ou aliphatique et pouvant comprendre des hétéroatomes ;
- $R_2$ est un radical hydrocarboné aliphatique ou aromatique ramifié ou non comprenant de 2 à 20 atomes de carbone,
- $R_3$ et $R_4$ représentent indépendamment l'un de l'autre l'hydrogène, un radical —OH, et/ou un radical hydrocarboné comprenant au moins un groupement :

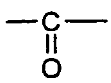
ou
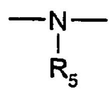
;

- $R_5$ représente l'hydrogène ou un radical hydrocarboné comprenant de 1 à 6 atomes de carbone ;
- m représente un nombre entier compris entre 3 et 8 ;
- n représente un nombre entier compris entre 50 et 200 ;
- p représente un nombre entier compris entre 50 et 200 ; et

b) un système d'ignifugation comprenant au moins :

- un composé (F1) de formule (VI)

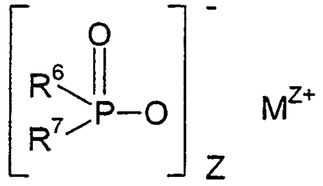

(VI)

dans lequel :

- $R_6$ et $R_7$ sont identiques ou différents et représentent une chaîne alkyle linéaire ou branchée comprenant de 1 à 6 atomes de carbones et/ou un radical aryle;
- M représente un ion calcium, magnésium, aluminium et/ou zinc ;
- Z représente 2 ou 3 ; et
- un composé (F2) qui est un produit de réaction entre l'acide phosphorique et la mélamine et/ou un produit de réaction entre l'acide phosphorique et un produit condensé de la mélamine.

**15.** Procédé de fabrication d'un article par mise en forme d'une composition selon l'une quelconque des revendications 1 à 13, par un procédé choisi dans le groupe comprenant un procédé d'extrusion, de moulage, d'injection, et de filage.

**16.** Article obtenu par mise en forme d'une composition selon l'une quelconque des revendications 1 à 13.

**Patentansprüche**

**1.** Flammgehemmte Zusammensetzung, die wenigstens umfasst:

a) eine Polyamidmatrix auf der Basis von sternförmigem Polyamid, das wenigstens makromolekulare Ketten der Formel (I):

$$R_1\text{-}[\text{-}A\text{-}X\text{-}(\text{-}Y\text{-}R_2\text{-}Z\text{-})_n\text{-}R_3]_m \qquad \text{(I)}$$

und gegebenenfalls makromolekulare Ketten der Formel (II):

$$R_4\text{-}(\text{-}Y\text{-}R_2\text{-}Z\text{-}]_p\text{-}R_3 \qquad \text{(II)}$$

umfasst, worin:

- Y der Rest:

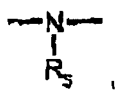

ist, wenn X und Z den Rest

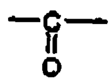

darstellen;
- Y der Rest

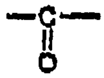

ist, wenn X und Z den Rest:

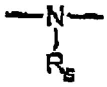

darstellen;

- A eine kovalente Bindung oder ein aliphatischer Kohlenwasserstoffrest ist, der Heteroatome umfassen kann und 1 bis 20 Kohlenstoffatome umfasst;
- $R_1$ ein linearer oder cyclischer, aromatischer oder aliphatischer Kohlenwasserstoffrest mit wenigstens 2 Kohlenstoffatomen ist, der Heteroatome umfassen kann;
- $R_2$ ein aliphatischer oder aromatischer, verzweigter oder nicht verzweigter Kohlenwasserstoffrest mit 2 bis 20 Kohlenstoffatomen ist,
- $R_3$ und $R_4$ unabhängig voneinander Wasserstoff, einen -OH-Rest und/oder einen Kohlenwasserstoffrest mit wenigstens einer Gruppe:

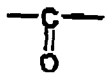 oder 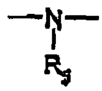

darstellen;

- $R_5$ Wasserstoff oder einen Kohlenwasserstoffrest mit 1 bis 6 Kohlenstoffatomen darstellt;
- m eine ganze Zahl zwischen 3 und 8 darstellt;
- n eine ganze Zahl zwischen 50 und 200 darstellt, und
- p eine ganze Zahl zwischen 50 und 200 darstellt; und

b) ein flammhemmendes System, das wenigstens umfasst:

- eine Verbindung (F1) der Formel (VI)

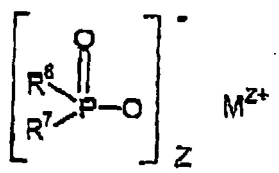

(VI)

worin:

- $R_6$ und $R_7$ gleich oder verschieden sind und eine lineare oder verzweigte Alkylkette mit 1 bis 6 Kohlenstoffatomen und/oder einen Arylrest darstellen;
- M ein Calcium-, Magnesium-, Aluminium- und/oder Zinkion darstellt;
- Z 2 oder 3 darstellt; und
- eine Verbindung (F2), die ein Produkt der Reaktion zwischen Phosphorsäure und Melamin und/oder ein Produkt der Reaktion zwischen Phosphorsäure und einem kondensierten Produkt des Malamins ist.

**2.** Zusammensetzung gemäß Anspruch 1, die 30 bis 99 Gew.-% stemförmiges Polyamid, bezogen auf das Gesamtgewicht der Zusammensetzung, umfasst.

**3.** Zusammensetzung gemäß Anspruch 1 bis 2, die 1 bis 70 Gew.-% des flammhemmenden Systems, bezogen auf das Gesamtgewicht der Zusammensetzung, umfasst.

**4.** Zusammensetzung gemäß einem der Ansprüche 1 bis 3, **dadurch gekennzeichnet, dass** der Rest $R_1$ ein Rest ist, der aus der cyctoaliphatischen, arylaliphatischen und linearen aliphatischen Gruppe ausgewählt ist, wobei das Masseverhältnis zwischen dem Gewicht an Polymerketten der Formel (1) und dem Gesamtgewicht an Polymerketten der Formeln (I) und (II) zwischen 0,10 und 1 liegt.

**5.** Zusammensetzung gemäß einem der Ansprüche 1 bis 3, **dadurch gekennzeichnet, dass** der Rest $R_1$ ein aromatischer Rest ist, wobei das Masseverhältnis zwischen dem Gewicht an Polymerketten der Formel (I) und dem Gesamtgewicht an Polymerketten der Formeln (I) und (II) kleiner als 1, vorzugsweise kleiner als 0,9 ist.

**6.** Zusammensetzung gemäß einem der Ansprüche 1 bis 5, **dadurch gekennzeichnet, dass** $R_2$ ein Pentamethylenrest ist.

**7.** Zusammensetzung gemäß einem der Ansprüche 1 bis 6, **dadurch gekennzeichnet, dass** $R_1$ einen Rest darstellt der ausgewählt ist unter dem Cyclohexanontetraylrest, dem Propan-1, 1,1-triylrest, dem Propan-1,2,3-triylrest und dem Rest:

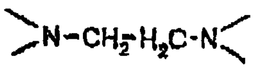

**8.** Zusammensetzung gemäß einem der Ansprüche 1 bis 7, **dadurch gekennzeichnet, dass** A einen Rest darstellt, der unter dem Methylen-, Polymethylen- und Polyoxyalkylenrest ausgewählt ist

**9.** Zusammensetzung gemäß einem der Ansprüche 1 bis 8, **dadurch gekennzeichnet, dass** die Phosphinsäure der Verbindung F1 aus der Gruppe ausgewählt sein kann, die aus Dimethylphosphinsäure, Ethylmethylphosphinsäure, Diethylphosphinsäure und Methyl-n-propylphosphinsäure oder ihrem Gemisch besteht.

**10.** Zusammensetzung gemäß einem der Ansprüche 1 bis 9, **dadurch gekennzeichnet, dass** die Verbindung F2 aus der Gruppe ausgewählt sein kann, die aus Melaminpolyphosphat, Melampolyphosphat und Melempolyphosphat oder ihrem Gemisch besteht

**11.** Zusammensetzung gemäß einem der Ansprüche 1 bis 10, **dadurch gekennzeichnet, dass** sie 0 bis 80 Gew.-% Verstärkungsfüllstoffe, bezogen auf das Gesamtgewicht der Zusammensetzung, umfasst.

**12.** Zusammensetzung gemäß einem der Ansprüche 1 bis 11, **dadurch gekennzeichnet, dass** besagte Zusammensetzung Verstärkungsfüllstoffe, die aus der Gruppe ausgewählt sind, die umfasst: Glasfasern, Kohlenstofffasem, mineralische Fasern, Keramikfasem, hitzebeständige organische Fasem, wie Polyphthalamidfasern, und mineralische Füllstoffe, wie Wollastonit, Kaolin, Ton, Siliciumdioxid und Glimmer, und mineralische Nanofüllstoffe, wie Montmorillonit und $\alpha$-Zr-Phosphat, oder ihre Gemische umfasst.

**13.** Zusammensetzung gemäß einem der Ansprüche 1 bis 12, **dadurch gekennzeichnet, dass** besagte Zusammensetzung flammhemmende Mittel oder Mittel, die mit dem flammhemmenden System zusammenwirken, umfasst, die ausgewählt sind aus der Gruppe, die die anorganischen Verbindungen und/oder mineralische Produkte, die ausgewählt sind unter: den Zeolithen, Keramikpulver, Magnesiumhydroxid, den Hydrotalkiten, den Magnesiumcarbonaten und den anderen Erdalkalicarbonaten, Zinkoxid, Zinkstannat, Zinkhydroxystannat, Zinkphosphat, Zinkborat, Zinksulfid, Aluminiumhydroxid, Aluminiumphosphat und rotem Phosphor, die stickstoffhaltigen organischen Verbindungen, die der Klasse der Triazine angehören, wie Melamin oder seine Derivate, wie Melamincyanurat und Melaminphosphate, -polyphosphate und -pyrophosphate, die phosphororganischen Säuren und ihre Salze umfasst.

**14.** Verfahren zur Herstellung einer flammgehemmten Zusammensetzung, bei dem man wenigstens mischt

a) eine Polyamidmatrix auf der Basis von sternförmigem Polyamid, das wenigstens makromolekulare Ketten der Formel (I);

$$R_1\text{-}[\text{-}A\text{-}X\text{-}(\text{-}Y\text{-}R_2\text{-}Z\text{-})_n\text{-}R_3]_m \qquad \text{(I)}$$

und gegebenenfalls makromolekulare Ketten der Formel (II):

$$R_4\text{-}[\text{-}Y\text{-}R_2\text{-}Z\text{-}]_p\text{-}R_3 \qquad \text{(II)}$$

umfasst, worin:

- Y der Rest

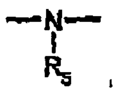

ist, wenn X und Z den Rest:

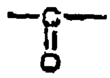

darstellen;
- Y der Rest:

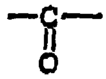

ist, wenn X und Z den Rest:

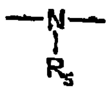

darstellen;
- A eine kovalente Bindung oder ein aliphatischer Kohlenwasserstoffrest ist, der Heteroatome umfassen kann und 1 bis 20 Kohlenstoffatome umfasst;
- $R_1$ ein linearer oder cyclischer, aromatischer oder aliphatischer Kohlenwasserstoffrest mit wenigstens 2 Kohlenstoffatomen ist, der Heteroatome umfassen kann;
- $R_2$ ein aliphatischer oder aromatischer, verzweigter oder nicht verzweigter Kohlenwasserstoffrest mit 2 bis 20 Kohlenstoffatomen ist,
- $R_3$ und $R_4$ unabhängig voneinander Wasserstoff, einen -OH-Rest und/oder einen Kohlenwasserstoffrest mit wenigstens einer Gruppe:

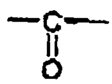

oder

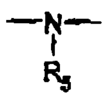

darstellen;
- $R_5$ Wasserstoff oder einen Kohlenwasserstoffrest mit 1 bis 6 Kohlenstoffatomen darstellt;

- m eine ganze Zahl zwischen 3 und 8 darstellt;
- n eine ganze Zahl zwischen 50 und 200 darstellt;
- p eine ganze Zahl zwischen 50 und 200 darstellt; und

b) ein flammhemmendes System, das wenigstens umfasst:

- eine Verbindung (F1) der Formel (VI)

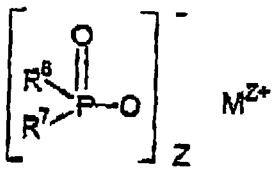

(VI)

worin:

- $R_6$ und $R_7$ gleich oder verschieden sind und eine lineare oder verzweigte Alkylkette mit 1 bis 6 Kohlenstoffatomen und/oder einen Arylrest darstellen;
- M ein Calcium-, Magnesium-, Aluminium- und/oder Zinkion darstellt;
- Z 2 oder 3 darstellt; und
- eine Verbindung (F2), die ein Produkt der Reaktion zwischen Phosphorsäure und Melamin und/oder ein Produkt der Reaktion zwischen Phosphorsäure und einem kondensierten Produkt des Melamins ist.

**15.** Verfahren zur Herstellung eines Gegenstands durch Formgebung einer Zusammensetzung gemäß einem der Ansprüche 1 bis 13 durch ein Verfahren, das aus der Gruppe, die ein Extrusions-, Gieß-, Spritz- und Spinnverfahren umfasst, ausgewählt ist.

**16.** Gegenstand, erhalten durch Formgebung einer Zusammensetzung gemäß einem der Ansprüche 1 bis 13.

**Claims**

**1.** Fire-resistant composition comprising at least:

a) a star polyamide-based polyamide matrix comprising at least macromolecular chains of formula (I):

$$R_1\text{-}[\text{-}A\text{-}X\text{-}(\text{-}Y\text{-}R_2\text{-}Z\text{-})_n\text{-}R_3]_m \quad (I)$$

and optionally macromolecular chains of formula (II):

$$R_4\text{-}[\text{-}Y\text{-}R_2\text{-}Z\text{-}]_p\text{-}R_3 \quad (II)$$

in which:

- Y is the radical:

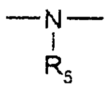

when X and Z represent the radical:

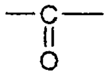 ;

- Y is the radical:

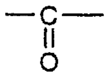

when X and Z represent the radical:

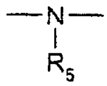 ;

- A is a covalent bond or an aliphatic hydrocarbon-based radical possibly comprising hetero atoms and comprising from 1 to 20 carbon atoms;
- $R_1$ is a linear or cyclic, aromatic or aliphatic hydrocarbon-based radical comprising at least 2 carbon atoms, and possibly comprising hetero atoms;
- $R_2$ is an aliphatic or aromatic, branched or unbranched hydrocarbon-based radical comprising from 2 to 20 carbon atoms;
- $R_3$ and $R_4$ independently of one another represent hydrogen, an -OH radical and/or a hydrocarbon-based radical comprising at least one group:

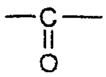 or 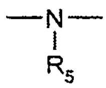 ;

- $R_5$ represents hydrogen or a hydrocarbon-based radical comprising from 1 to 6 carbon atoms;
- m represents an integer between 3 and 8;
- n represents an integer between 50 and 200; and
- p represents an integer between 50 and 200; and

b) a fire-resistant system comprising at least:

- a compound (F1) of formula (VI):

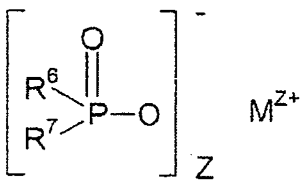 (VI)

in which:

- $R_6$ and $R_7$ are identical or different and represent a linear or branched alkyl chain comprising from 1 to 6 carbon atoms and/or an aryl radical;
- M represents a calcium, magnesium, aluminium and/or zinc ion;
- Z represents 2 or 3; and
- a compound (F2), which is a product of reaction between phosphoric acid and melamine and/or a product

of reaction between phosphoric acid and a condensed melamine product.

**2.** Composition according to Claim 1, comprising from 30% to 99% by weight of star polyamide relative to the total weight of the composition.

**3.** Composition according to Claim 1 or 2, comprising from 1% to 70% by weight of the fire-resistant system relative to the total weight of the composition.

**4.** Composition according to any one of Claims 1 to 3, **characterized in that** the radical $R_1$ is a radical chosen from the cycloaliphatic, arylaliphatic and linear aliphatic group, the mass ratio between the weight of polymer chains of formula (I) and the total weight of polymer chains of formulae (I) and (II) being between 0.10 and 1.

**5.** Composition according to any one of Claims 1 to 3, **characterized in that** the radical $R_1$ is an aromatic radical, the mass ratio between the weight of polymer chains of formula (I) and the total weight of polymer chains of formulae (I) and (II) being less than 1 and preferably less than 0.9.

**6.** Composition according to any one of Claims 1 to 5, **characterized in that** $R_2$ is a pentamethylene radical.

**7.** Composition according to any one of Claims 1 to 6, **characterized in that** $R_1$ represents a radical chosen from the cyclohexanonetetrayl radical, the 1,1,1-triylpropane radical, the 1,2,3-triylpropane radical and the radical:

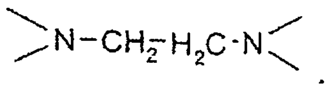

**8.** Composition according to any one of Claims 1 to 7, **characterized in that** A represents a radical chosen from the methylene, polymethylene and polyoxyalkylene radical.

**9.** Composition according to any one of Claims 1 to 8, **characterized in that** the phosphinic acid of compound F1 may be chosen from the group consisting of dimethylphosphinic acid, ethylmethylphosphinic acid, diethylphosphinic acid and methyl-n-propylphosphinic acid, or a mixture thereof.

**10.** Composition according to any one of Claims 1 to 9, **characterized in that** the compound F2 may be chosen from the group consisting of melamine polyphosphate, melam polyphosphate and melem polyphosphate, or a mixture thereof.

**11.** Composition according to any one of Claims 1 to 10, **characterized in that** it comprises from 0 to 80% by weight of reinforcing fillers relative to the total weight of the composition.

**12.** Composition according to any one of Claims 1 to 11, **characterized in that** said composition comprises reinforcing fillers chosen from the group comprising: glass fibres, carbon fibres, mineral fibres, ceramic fibres, heat-resistant organic fibres, for instance polyphthalamide fibres, and mineral fillers such as wollastonite, kaolin, clay, silica and mica, and mineral nanofillers such as montmorillonite and $\alpha$-Zr phosphate, or a mixture thereof.

**13.** Composition according to any one of Claims 1 to 12, **characterized in that** said composition comprises fire-resistant agents or fire-resistant-system synergists chosen from the group comprising inorganic compounds and/or mineral products chosen from: zeolites, ceramic powder, magnesium hydroxide, hydrotalcites, magnesium carbonates and other alkaline-earth metal carbonates, zinc oxide, zinc stannate, zinc hydroxystannate, zinc phosphate, zinc borate, zinc sulfide, aluminium hydroxide, aluminium phosphate and red phosphorus, organonitrogen compounds belonging to the triazine class, such as melamine or derivatives thereof, for instance melamine cyanurate, melamine phosphates, polyphosphates and pyrophosphates and organophosphorous acids and salts thereof.

**14.** Process for manufacturing a fire-resistant composition, in which at least the following are mixed together:

a) a star polyamide-based polyamide matrix comprising at least macromolecular chains of formula (I):

$$R_1\text{-}[\text{-A-X-(-Y-}R_2\text{-Z-)}_n\text{-}R_3]_m \qquad (I)$$

and optionally macromolecular chains of formula (II):

$$R_4\text{-}[\text{-}Y\text{-}R_2\text{-}Z\text{-}]_p\text{-}R_3 \qquad (II)$$

in which:

- Y is the radical:

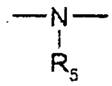

when X and Z represent the radical:

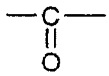
;

- Y is the radical:

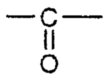

when X and Z represent the radical:

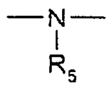
;

- A is a covalent bond or an aliphatic hydrocarbon-based radical possibly comprising hetero atoms and comprising from 1 to 20 carbon atoms;
- $R_1$ is a linear or cyclic, aromatic or aliphatic hydrocarbon-based radical comprising at least 2 carbon atoms and possibly comprising hetero atoms;
- $R_2$ is an aliphatic or aromatic, branched or unbranched hydrocarbon-based radical comprising from 2 to 20 carbon atoms;
- $R_3$ and $R_4$ independently of one another represent hydrogen, an -OH radical and/or a hydrocarbon-based radical comprising at least one group:

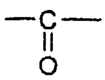
or
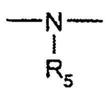
;

- $R_5$ represents hydrogen or a hydrocarbon-based radical comprising from 1 to 6 carbon atoms;
- m represents an integer between 3 and 8;
- n represents an integer between 50 and 200;
- p represents an integer between 50 and 200; and

b) a fire-resistant system comprising at least:

- a compound (F1) of formula (VI):

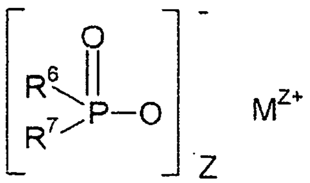

(VI)

in which:

- $R_6$ and $R_7$ are identical or different and represent a linear or branched alkyl chain comprising from 1 to 6 carbon atoms and/or an aryl radical;
- M represents a calcium, magnesium, aluminium and/or zinc ion;
- Z represents 2 or 3; and
- a compound (F2), which is a product of reaction between phosphoric acid and melamine and/or a product of reaction between phosphoric acid and a condensed melamine product.

**15.** Process for manufacturing an article by forming a composition according to any one of Claims 1 to 13, via a process chosen from the group comprising an extrusion process, a moulding process, an injection process and a spinning process.

**16.** Article obtained by forming a composition according to any one of Claims 1 to 13.